(19)

Europäisches
Patentamt

European
Patent Office

Office européen
des brevets

(11) **EP 3 456 956 A1**

(12) **EUROPEAN PATENT APPLICATION**

(43) Date of publication:
**20.03.2019 Bulletin 2019/12**

(51) Int Cl.:
**F03B 13/18** *(2006.01)*   **F03B 15/00** *(2006.01)*

(21) Application number: **17191507.7**

(22) Date of filing: **16.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Corpower Ocean AB**
**114 28 Stockholm (SE)**

(72) Inventors:
 • ASGEIRSSON, Gunnar Steinn
  **113 56 Stockholm (SE)**
 • TODALHAUG, Jörgen Hals
  **1450 Nesoddtangen (NO)**
 • MÖLLER, Patrik
  **118 50 Stockholm (SE)**

(74) Representative: **Kransell & Wennborg KB**
**P.O. Box 27834**
**115 93 Stockholm (SE)**

(54) **METHOD OF CONTROLLING A WAVE ENERGY CONVERTER AND SUCH A WAVE ENERGY CONVERTER**

(57)     A method of controlling a wave energy converter comprising an energy absorber (1a) which oscillates when influenced by ocean waves, a rotating power-take-off device (4) connected to the absorber, having at least one rotational shaft (8a, 8b, 8c) and at least one connectable rotational inertia device (9a, 9b, 9c). The method comprises the steps of;

- converting the oscillating movement of the absorber into a rotational movement of the at least one rotational shaft (8a, 8b, 8c) by means of the power-take-off device (4),

- detecting the actual frequency and the actual amplitude of the incident ocean waves,

- calculating a desired resonance frequency of the wave energy converter and a desired amplitude of the absorber's oscillating motion based on the detected actual frequency and amplitude respectively of the ocean waves,

- adjusting the resonance frequency of the wave energy converter towards the desired resonance frequency by selectively connecting and disconnecting at least one of said inertia device(-s) (9a, 9b , 9c) to or from at least one of said rotational shaft(-s) (8a, 8b, 8cc), and

- adjusting the amplitude of the absorber's oscillating movement towards the desired amplitude by selectively connecting and disconnecting at least one of said inertia device(-s) (9a, 9b, 9c) to or from at least one of said rotational shaft(-s) (8a, 8b, 8c) and having at least one energy extracting device (11a, 11b) connected to at least one of said rotational shaft(-s) (8a, 8b, 8c).

     A wave energy converter for carrying out the method is also described.

Fig. 1a

## Description

## Field of the invention

The invention relates to a method of controlling a wave energy converter for extracting energy from ocean waves. The wave energy converter comprises an absorber arranged to oscillate when influenced by ocean waves and a rotating power-take-off device which transforms the oscillating movement of the absorber into a rotary motion of an output shaft. The invention also relates to such a wave energy converter.

## Background and prior art

Wave energy converters (WEC) are used for extracting energy carried by ocean waves. Such converters may comprise an absorber which is arranged to follow the movements of the waves and which is connected to a linear electric generator or a hydraulic power-take-off (PTO) which transforms the kinetic energy of the absorber into electric energy. Another type of WEC comprises an absorber which is influenced by the movements of the waves and a mechanical device which transforms the motion of the absorber into a rotational movement of an output shaft. The output shaft may be connected to an electrical generator, a pump or some other means for transforming the rotational movement of the output shaft into useful energy. The present invention relates to such a WEC comprising such a mechanical device, often referred to as a rotating power-take-off device.

The absorber may be of different types. One frequently used type is the so called point absorber. Point absorbers comprise a buoy with small dimensions as compared with the predominant wavelengths of the incident waves. The buoy either floats on the ocean surface or is submerged below the surface and oscillates reciprocally mainly in the vertical direction. Similar types of absorbers are the so called terminators or attenuators which also moves generally in the vertical plane but which differ from the point absorbers in that they have large dimensions in relation to the predominant wavelengths of the incident waves. Another type of absorber, normally referred to as a surge converter, comprises a body which floats on the surface or is submerged beneath the surface and which follows the waves back and forth in a generally horizontal arc-shaped movement. The present invention is applicable to WECs comprising all these types of absorbers.

An important aspect of all WEC is to optimize the absorption efficiency when absorbing the energy carried by the waves into the WEC. For WECs utilizing an oscillating absorber, the absorption efficiency is highly dependent on the relations between the frequency and the amplitude of the absorber's oscillating movement and the frequency and amplitude of the incident waves. The total absorption efficiency may thus be enhanced by controlling the movement of the absorber such that it exhibits an optimum frequency and amplitude in relation to the exciting waves.

With regard to controlling the frequency of the absorber, optimal energy absorption conditions prevail when the velocity of the absorber is in phase with the force generated by the exciting waves. This also means that the potential and kinetic energy storage of the absorber are of equal size.

Correspondingly, optimal energy absorption efficiency prevails when the amplitude of the absorber is of a certain ratio in relation to the amplitude to the exciting waves. This ratio depends on the absorbers capability to re-radiate waves into the ocean and the optimal amplitude of the absorber prevails when the re-radiated waves completely eliminate or extinguish the incident waves.

For theoretical sinusoidal incident waves of a certain frequency and amplitude, the absorber and other components of the WEC may be designed and dimensioned such that the absorber is fully in phase with the force generated by the incident waves and oscillates with an amplitude such that the re-radiated waves completely extinguish the incident waves, thereby to achieve an optimal energy absorption efficiency.

In practice however, ocean waves are never sinusoidal with constant frequency and amplitude. To the contrary, in real applications the incident waves vary greatly. These variations occur both on short and long term. At short term the frequency or wave-length and the amplitude varies between each incident wave. At a longer term, also the average values of the frequency and amplitude of several incident waves as seen over a certain time period, vary greatly between different time periods. Such longer term averages are often referred to as the sea state which thus may vary greatly e.g. from hour to hour, from day to day or between seasons.

For these reasons, several methods and arrangements for controlling the movement of the absorber have been developed. A purpose of these methods and arrangements have been to allow the control of the absorber's frequency and amplitude such as to be able to adjust these parameters for bringing them closer to the optimal frequency and amplitude. Some of these previously known techniques aim at optimizing the movement of the absorber with regard to different sea states whereas other techniques are directed to controlling the absorber's movement at each incident wave.

Examples of such known controlling arrangements comprise braking means such as mechanical, hydraulic or pneumatic latching means for holding the absorber in a fixed position during certain portions of each oscillating cycle, and reactive control means, such as electrical motors/generators or hydraulic motors/pumps which are arranged to selectively damp and induce movement of the absorber during each cycle.

The article "Optimum Control of Oscillation of Wave-Energy Converters" by J. Falnes, International Journal of Offshore and Polar Engineering; Vol. 12, No. 2; June 2002; pages 147-155 (ISBN 1053-5381) discusses the theory of optimal phase and amplitude control of WECs.

WO 2012/008896 A1 discloses an energy transforming unit which may be used together with an absorber for converting wave energy into useful energy. At some embodiments the energy transforming unit comprises hydraulic latch valves by which the movement of the absorber may be controlled.

GB 1522 661 discloses a system for the conversion of ocean wave energy which comprises a movable interacting member in the form of a semi-submerged tank which is subjected to oscillating forces from ocean waves and an energy absorbing mechanism such as an electrical generator which both form part of a damped oscillating system. In order to adapt the natural frequency of the oscillating system to the characteristic frequency of the ocean waves, a flywheel is coupled to the interacting member. By this means the effective mass or inertia of the system is increased with the intention to lower the natural frequency of the system and to bring it closer to a typical wave frequency. At one embodiment, the flywheel is provided with a radially displaceable mass such as to allow variation of the tuning mass to thereby adjust the natural frequency of the system. At another embodiment a gear is provided for adjustment of the effective mass by adjusting the relation between the linear movement of a wire by which the interacting member is coupled to the generator and the rotational movement of the flywheel. GB 1522 661 also discloses a similar oscillating system wherein the flywheel is replaced by or complemented with a drive means such as a motor which is adapted to impart an oscillating movement to the oscillating system thereby to vary the amplitude and frequency of the oscillating system, a method often referred to as reactive control.

**Summary of the invention**

An object of the present invention is to provide an enhanced method of controlling a wave energy converter as well as an enhanced wave energy converter for carrying out the method.

Another object is to provide such a method and WEC which allows for a comparatively high energy absorption and energy conversion efficiency.

Yet another object is to provide such a method and WEC by which the frequency and amplitude of a wave energy absorber may be readily and precisely controlled.

Still another object is to provide such a method and WEC which readily allows for the control of the absorber's frequency and amplitude during either portions of an oscillating cycle or during a full or several cycles.

Another object is to provide temporary energy storage in the WEC, and smoothing of the electrical power output

Yet another object is to reduce the required torque capacity of the energy converting devices of the power-take-off, such as electric generators or pumps.

A further object is to provide such a method and WEC which is reliable in use and which allows for a long service life of the WEC.

According to a first aspect of the invention, there is provided a method of controlling a wave energy converter comprising an energy absorber which oscillates when influenced by ocean waves, a rotating power-take-off device connected to the absorber, having at least one rotational shaft and at least one connectable rotational inertia device. The method comprises the steps of;

- converting the oscillating movement of the absorber into a rotational movement of the at least one rotational shaft by means of the power-take-off device,
- detecting the actual frequency and the actual amplitude of the incident ocean waves,
- calculating a desired resonance frequency of the wave energy converter and a desired amplitude of the absorber's oscillating motion based on the detected actual frequency and amplitude respectively of the ocean waves,
- adjusting the resonance frequency of the wave energy converter towards the desired resonance frequency by selectively connecting and disconnecting at least one of said inertia device(-s) to or from at least one of said rotational shaft(-s), and
- adjusting the amplitude of the absorber's oscillating movement towards the desired amplitude by selectively connecting and disconnecting at least one of said inertia device(-s) (9a, 9b, 9c) to or from at least one of said rotational shaft(-s) (8a, 8b, 8c) and having at least one energy extracting device (11a, 11b) connected to at least one of said rotational shaft(-s) (8a, 8b, 8c).

By connecting any desired number of inertia devices, the total inertia of the WEC is increased such that the resonance frequency is reduced correspondingly. By selecting the number of inertia devices which are connected to the output shaft it is possible vary the reduction of the natural frequency. Hereby an efficient phase control of the absorber is achieved such that the absorber may be brought to oscillate in phase or at least close to in phase with the incident waves.

The method also allows for that the amplitude of the oscillating absorber is controlled by simultaneously having at least one energy extracting device such as an electric generator, a pump or the like acting on the output shaft and/or on at least one connectable inertia device. By providing torque in opposite direction of the rotation, such energy extracting device, the oscillating movement is damped whereby the amplitude of the oscillating absorber is reduced. When connected directly to a rotating shaft of the rotating PTO, such energy extraction device can directly provide damping during the entire stroke of the WEC, or during parts of the stroke. When connected to at least one inertia device, such energy extraction device can directly provide damping of the WEC motion during periods when the inertia device is connected to the rotating shaft of the PTO, an indirectly provide damping by reducing the velocity of the inertia device during periods when said inertia device is disconnected from the PTO. The damping and thereby the amplitude reduction may readily be varied by varying the torque applied by the energy extracting device.

The method thus provides for that both the resonance frequency and the amplitude may readily be controlled in order to bring either or both of these parameters towards their optimum values such that the energy absorption efficiency is increased. In addition, by selecting the desired time when the inertia device or devices is/are connected and the duration of the connected time it is possible to optimize the frequency and the amplitude either with regard to individual incident waves or with regard to the sea state, i.e. with regard to the statistically significant frequency and/or amplitude of the incident waves of any number of cycles.

When at least one inertia device is connected and disconnected during one and the same oscillating cycle it is also possible to control the acceleration and the velocity of the oscillating system.

By connecting at least one inertia device during acceleration and disconnecting it before or during deceleration in each or at least some oscillating cycles it is possible to utilize the rotating inertia devices both for providing damping (amplitude control)and for internal temporary storage of kinetic energy. The kinetic energy extracted from the WEC motions and stored in this manner may then be extracted by an energy extracting device connected to the at least one rotating inertia device while the inertia device is disconnected from the PTO. Such functionality may e.g. be used for smoothening the power output from the power-take-off device. For instance, by having at least two inertia devices with an energy extracting device connected to each, a PTO system can be realized where at least one of the two independent conversion units are delivering electricity output at all times, by using kinetically stored energy to bridge periods of time where the motion of the oscillating WEC is zero. Mechanical power smoothing prior to the next step of energy conversion allows for the use of smaller energy extracting devices since they can be dimensioned to handle less varying power profiles. It also allows subsequent components in wave farms, such as array cables and connectors between WEC devices to be dimensioned for lower peak power.

At some instances it may be preferable to connect and/or disconnect the suitable number of inertia devices at the turning points of the oscillating cycles, when the velocity of the oscillating movement is zero or close to zero.

The load of the at least one rotating inertia device may, when connected to the rotational shaft, be connected during only a portion of an oscillating cycle of the absorber.

Hereby the frequency and amplitude may be controlled individually for each incident wave which increases the overall power conversion efficiency.

For example, the load of the at least one rotating inertia device may be connected to the rotational shaft only during acceleration of the absorber.

This allows i.a. for the possibility to control the frequency (phase control) with regard to individual waves or the sea state, and to provide controlled damping (amplitude control) and smoothening the power output from the power-take-off device.

Alternatively, the load of the at least one inertia device may be connected to the rotational shaft during one or several full oscillating cycles of the absorber.

This allows the possibility to control the frequency with regard to the sea state. Amplitude control can in this embodiment be provided by an energy extracting device, connected to the rotating PTO in parallel or in series with said at least one connectable inertia device.

The inertia device may be connected to and disconnected from the rotational shaft by means of a clutch.

This provides a simple and reliable means for controlling the WEC. At such embodiments the inertia devices may be arranged to rotate bi-directionally together with the oscillating rotation of the output shaft.

Alternatively or in combination, the load of the inertia device may be connected to the rotational shaft by means of a freewheel device.

This allows for rectified embodiments where the inertia devices rotate in a single direction. This in turn reduces the number of components which will be accelerated and retarded during each cycle.

The method may comprise connecting and disconnecting a selected number out of a total number of rotating inertia devices each of which has different inertias.

By this means the possibility to vary the total inertia of the system increases by allowing the connection and disconnection of various combinations of such different inertias.

The method may comprise connecting and disconnecting a selected number out of a total number of rotating inertia devices arranged in series to the rotating shaft, allowing stacking of several inertia devices after each other on the same shaft and reducing the required number of output shafts from the rotating PTO.

Alternatively or in combination, the method may comprise connecting and disconnecting a selected number out of a total number of rotating inertia devices arranged in parallel to the rotating shaft, providing simple integration of multiple inertia devices next to each other. The method may comprise varying a load applied to the energy extracting device for adjusting the damping and thereby the degree of amplitude reduction of the oscillating absorber.

The method may further comprise varying a load applied to the energy extracting device for adjusting the damping and thereby the degree of amplitude reduction of the oscillating absorber.

The method may comprise applying a pretensional force to the absorber which pretensional force reduces the required mass of the system and thereby the total inertia of the oscillating wave energy converter.

By this means, the nominal resonance frequency of the WEC may be increased such that it is higher than the wave frequencies normally prevailing at the site where the WEC is to be installed. By using the WEC with a natural frequency significantly higher than incoming waves, the response of the WEC and thereby the loads can be minimized, such load shedding feature can be used to enhance survivability of the WEC in storm conditions. In operational sea states where the desire is to optimize energy absorption, the actual resonance frequency of the system may readily be adapted to the wave frequencies merely by connecting a desired number of inertia devices to thereby reduce the resonance frequency accordingly.

The method may further comprise controlling the movement of the absorber also by means of additional control means.

At such embodiments, the additional control means may comprise a negative spring arrangement, known as a snap-through mechanism that reduce system stiffness, latching means, such as a rotational or linear brake device or reactive control means, such as an electrical motor and/or generator or a hydraulic or pneumatic motor and/or pump used to affect the phase by reactive control.

According to a second aspect, the invention relates to a wave energy converter for carrying out the inventive method. The wave energy converter comprises;

- a rotating power-take-off device comprising means for connection to a an absorber which oscillates under the influence of ocean waves and a at least one rotational shaft and being arranged to convert a oscillating movement of the absorber into a rotational movement of the at least one rotational shaft,
- at least one connectable rotational inertia device,
- detection means for detecting the actual frequency and/or the actual amplitude of the ocean waves,
- calculation means for calculating a desired resonance frequency of the wave energy converter and a desired amplitude of the absorber's oscillating movement based on the actual frequency and amplitude respectively of the ocean waves,
- control and connection means for selectively connecting and disconnecting at least one of said inertia device(-s) to at least one of said rotational shaft(-s) in order to adjust the resonance frequency of the wave energy converter towards said desired resonance frequency, and
- at least one energy extracting device which is arranged to be connected to at least one of said rotational shaft(-s) during at least periods of time, for adjusting the amplitude of the absorber towards said desired amplitude.

The wave energy converter provides advantages that correspond to the method according to the first aspect.

The connection means may comprise a clutch.

Alternatively or in combination, the connection means may comprise a freewheel.

At least two rotating inertia device may be arranged in series with intermediate connection means.

At least two rotating inertia devices may be arranged in parallel with respective connection means for connection and disconnection to the output shaft.

The wave energy converter may comprise a plurality of inertia devices having different inertia.

The wave energy converter may further comprise a pretension device arranged to reduce the total inertia of the oscillating absorber and wave energy converter.

The pretension device may comprise a linearly acting pretension unit such as a pressurized gas cylinder, a hydraulic cylinder, a linear motor and/or generator or a mechanical spring.

Alternatively or in combination the pretension device may comprise a rotary acting pretension unit such as a rotational generator and/or motor, a hydraulic or pneumatic pump and/or motor, a flat spiral spring or a weight connected to a rotating member by means of a wire or the like.

The wave energy converter may comprise further control means arranged for additional control of the movement of the absorber.

Such further control means may comprise latching means, such as a rotational or linear brake device, reactive control means, such as an electrical motor and/or generator or a hydraulic or pneumatic motor and/or pump or a negative spring arrangement e.g. such as described in WO 2015/107158 A1

Further objects and advantages of the invention will appear from the following detailed description of embodiments and from the appended claims Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

**Brief description of the drawings**

The invention is now described, by way of example, with reference to the accompanying schematic drawings, in which:

Fig 1a is a schematic representation of a semi-submerged (surface piercing) oscillating WEC with pretensioned mooring, a rotating PTO, four connectable inertia devices and two energy extracting devices.

Fig 1b illustrates a submersed oscillating WEC with mooring, a rotating PTO, four connectable inertia devices and two energy extracting devices.

Fig 1c illustrates an oscillating surge type of WEC located on the sea bed, with a rotating PTO, two connectable inertia devices and one energy extracting devices.

Fig 2a-d illustrate alternative embodiments for connecting inertia devices and energy extracting devices to a rotating PTO according to the invention.

Figs 3 and 4 illustrate different types of pre-tension systems that can be used with the wave energy converter at some embodiments of the invention.

Figs 5-8 illustrate additional means for phase control according to embodiments of the invention.

Fig 9a illustrates a PTO comprised in a WEC according to an embodiment of the invention and fig. 9b is a diagram showing the equivalent damping at varying wave periods for the WEC represented in fig. 9a.

Fig. 10 is a diagram illustrating the wave elevation to motion response at varying wave periods for different combinations of inertia devices connected to a PTO.

Fig 11a and 11b are diagrams illustrating the response and average power respectively in relation to varying wave periods for different combinations of connected inertia devices at a PTO.

**Detailed description of embodiments**

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

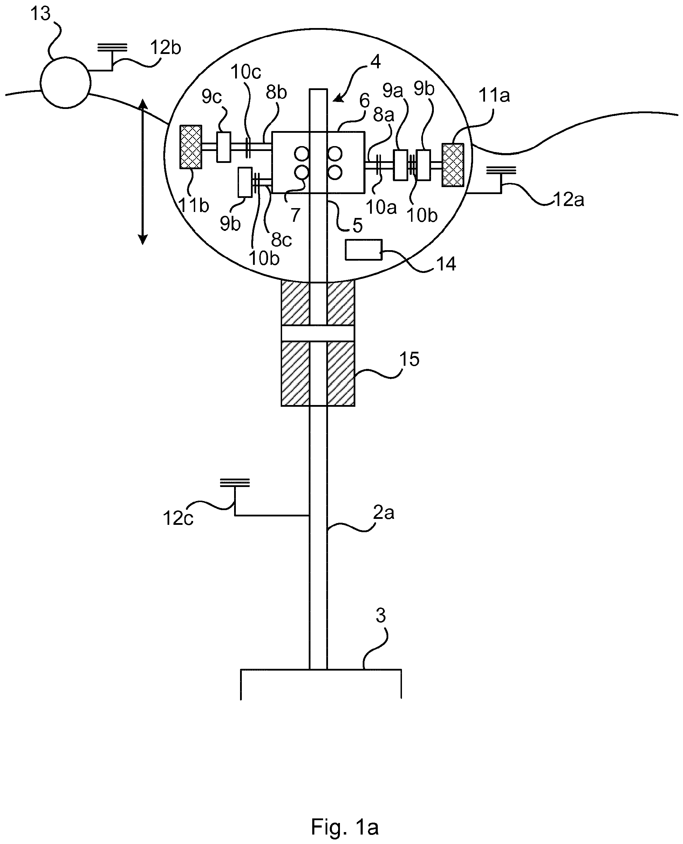

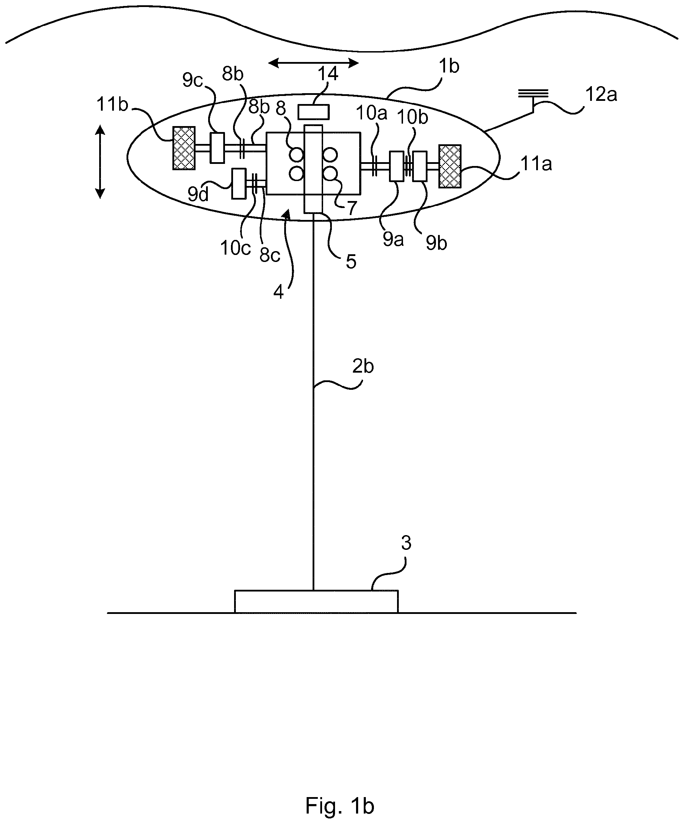

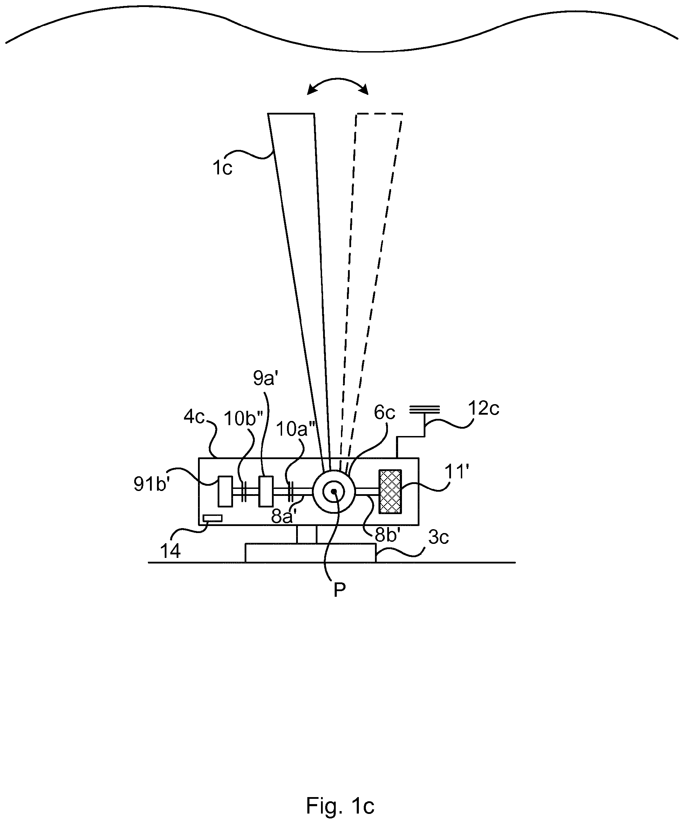

Figs. 1a-c illustrates schematically three different embodiments of a wave energy converter (WEC) according to the invention. Fig. 1a illustrates a surface piercing point absorber WEC, fig. 1b a submersed pressure differential WEC and fig. 1c a surge WEC.

The WEC illustrated in fig. 1a comprises an absorber in the form of a semi-submerged point absorber 1a which is arranged to float on the surface of an ocean at incident wave troughs and to pierce the surface and be submerged at incident wave crests. Such absorbers are sometimes also referred to as heaving buoys. The WEC further comprises a PTO and a mooring system 2 by which the WEC is anchored to a foundation 3 arranged at the sea bed. Typically the mooring system 2 comprises a wire or a rod which is fixed between a part of the PTO of the WEC and a foundation 3 arranged at the seabed, with a pretension system arranged to apply downforce on the buoy, using the mooring system as force reference. Additional mooring and tensioning configurations are possible within the scope of the invention. The WEC also comprises a rotational power-take-off device (PTO) 4 which is arranged inside the point absorber 1a. The PTO 4 comprises a toothed rack 5 which extends generally in the vertical direction. In the shown example the rack 5 is provided with gear teeth (not shown) on two opposing sides. The PTO also comprises a gearbox 6 which may be fixed to the point absorber 1a and provided with multiple pinions 7, which meshes with the gear teeth on each of said opposing sides of the rack 5. The pinions 7 are connected to three output shafts 8a, 8b, 8c via a cascade gear arrangement (not shown). Such gear arrangements are known in the art, e.g. from EP 2 921 694 A1 and are not described further in detail here.

In the shown example, a linear pretension unit 15 is arranged between the point absorber 1a and the mooring system 2. The pretension unit 15 comprises a pressurized compartment which is arranged to apply a pretensional force to the point absorber 1a in the downward direction. By this means the total mass and thereby the inertia of the oscillating parts of the system is reduced compared to a gravity balanced point absorber, such that its nominal resonance frequency is increased. Typically, the pretensional force is chosen such that the nominal resonance frequency of the point absorber is higher than the normal frequency of incoming waves.

The WEC is further provided with a rotational inertia devices arranged in the point absorber 1a. In the example shown in Fig. 1a this arrangement comprises four inertia devices in the form of flywheels 9a-d. Two of the flywheels 9a, 9b are arranged in series at a first output shaft 8a and the other two flywheels 9c, 9d are arranged in parallel at a second 8b and a third 8c output shaft respectively. Each flywheel 9a-d is connected to a respective clutch 10a-d by means of which each flywheel may be individually connected to and disconnected from the respective output shaft 8a-c. Preferably, the clutches 10a-d have electromechanical, hydraulic or pneumatic actuation such that they may be operated and controlled automatically by a control unit (not shown). Each flywheel 9a-d has a certain inertia which may differ from the inertia of each other flywheel. The total effective inertia applied to the rotating PTO may be varied by connecting none, one or several flywheels in different combinations. With four flywheels having different inertias as shown in fig. 1a, 15 different total effective inertia levels may be connected to the rotating PTO.

As an energy extracting device, a first electrical generator 11a is also connected to the first output shaft 8a and a second generator 11b is connected to the second output shaft 8b. The generators 11a, 11b are connected to an export cable (not shown) for exporting electric power from the buoy. For the case where the energy extracting device is a pump converting rotating power into fluid power, it may be converted into electricity and exported from the buoy through said electric power cable, or exported as fluid power from the buoy using high pressure hoses or pipes.

The WEC also comprises detection means for detecting the period i.e. the frequency and the amplitude of the incident waves. In fig. 1a three alternative detection means 12a-c are schematically illustrated. A first detection means comprises a wave measurement sensor, 12a, which is arranged on the point absorber wall, 1a. This wave measurement sensor can be a resistive or capacitive probe located along the buoy hull, a pressure sensor mounted on the hull which detects and registers pressure variations in the water or any other known means for measuring the surface elevation of waves. Another sensing system located within the PTO 4 registers the actual oscillating movement of the point absorber in terms of position, velocity and acceleration. These values are together with the measured wave data from the sensor 12a transmitted, via wires or wirelessly, to a computing device 14 which calculates the actual frequency and amplitude of the incident waves and the optimal amplitude and phase (frequency) of the point absorber to maximize power absorption. The computing device 14 then makes the control decision on which inertia devices and which energy extraction devices to connect or disconnect to achieve the calculated optimal phase and optimal damping of the point absorber 1a. For systems using energy extracting devices with adjustable torque, as part of the optimal damping control decision, the computing device 14 also controls the torque of the energy extracting devices 11a, 11b that are connected at the instant. In addition to historical and real-time information on wave amplitude, wave frequency and the oscillating motion of the point absorber, prediction algorithms can be used within the computing device 14 to predict wave and/or absorber motion within a certain prediction horizon into the future, typically 3-15 seconds. The control decision to change PTO settings to keep optimal phase and amplitude of the absorber can be performed several times per wave cycle, such as 100s of time per cycle, or less frequently up to a few times per hour in cases where the control is done to the significant statistical wave information to control the absorber to the mean values of the sea state rather than each incident wave. Making the control decision for each incident wave, or several times per wave, can typically provide more accurate absorber motion closer to the trajectory representing optimal phase and amplitude, thereby achieving a higher average power absorption.

A second mean of wave sensing uses an external wave measurement device 12b. In this case, the wave measurement can be provided by a wave data buoy, such as commercially available wave buoys from Fugro or Datawell or other wave sensing systems arranged at a buoy 13 which is moored to the seabed (not illustrated) and floats independently of the point absorber 1a in the ocean, in proximity to the point absorber 1a. The wave sensing device 12b is connected to the computing device 14 for transmitting wave data used in the computing device that calculates the optimal frequency and amplitude of the buoy and makes the control decisions to achieve optimal phase and optimal amplitude according to the method described for the sensor 12a. Since the buoy 13 is moored in proximity to the point absorber 1a, the so calculated frequency and amplitude of the buoy 13 may closely represent the actual frequency and amplitude of the incident waves .

A third detection means 12c is arranged along the mooring system 2, or on the sea bed in proximity to the foundation 3. This third detection means 12c can comprise a pressure sensing device which detects and registers pressure variations in the water surrounding the point absorber 1a, or an Acoustic Doppler Current Profiler (ADCP) commercially available from numerous venders, or other available means of measuring ocean waves from a certain depth below the surface. Values representing the wave surface elevation or pressure variations are transmitted to the computing device 14 which, based on these values, calculates the frequency and amplitude of the waves and makes the control decision according to previously described method for the sensor 12a.

The detections means 12a-c and the computing device 14 are thus arranged to detect the actual frequency and amplitude of the waves, to calculate the optimal phase and amplitude of the absorber and the make the control decision to achieve close to optimal phase and amplitude according to the method of the invention. In some applications it may be sufficient to use only one detection means whereas in other applications it may be desirable, for increased accuracy or redundancy, to utilize two or more detection means which may be of he same or of different types as described above.

When operating the WEC schematically illustrated in fig. 1a, the detection means 12a-c and the computing device 14 continuously detects the actual frequency and amplitude of the incident waves. Based on these values, the desired resonance frequency and amplitude of the point absorber is calculated. This calculation may be done by the computing device 14 or by other means.

For carrying out the inventive method, the WEC comprises an optimal phase controller and an optimal amplitude controller. These controllers may form part of the computing device 14 or may be arranged elsewhere.

The optimal phase controller selects the number of flywheels to be connected so that the oscillation frequency of the absorber is the same or as close as possible to the frequency of the measured incident wave. The natural oscillation period of the absorber, T_n is calculated according to

$$T\_n = 2\pi \, sqrt \, (m\_effective/S)$$

Where S is the combined stiffness of the oscillating system; calculated by adding the hydrostatic stiffness of the absorber with the possible additional contribution from other stiffness modulating units such as WaveSpring stiffness and pretension system, 15, stiffness.

And m_effective is the effective mass calculated by adding the physical mass of the oscillating system in [kg], the added mass of the water moving with the absorber and the effective mass of the connected flywheels acting on the rotating PTO, m_effective = m_physical + m_added_mass + m_flywheel, where m_flywheel is calculated as:

$$m\_flywheel \, [kg] = J\_flywheel ^x \, u^2 \, / \, r^2$$

where J_flywheel is the rotational inertia of the flywheel(s), 9a-c in [kgm2], u is the gear ratio of the gearbox 6 [non-dimensional] and r is the radius of the pinions, 7 in [m], meshing with the gear rack, 5.

After calculating the optimal flywheel combination to be connected, the controller actuates the respective clutches engaging such flywheels, making the absorber move in phase with the excitation force of the wave. When achieving this optimal phase, the potential and kinetic energy stored in the oscillator are of equal size.

Having selected the optimal flywheels to be connected, the acceleration of the connected flywheels provides a certain equivalent damping force acting in the opposite direction of the absorber motion. The optimal amplitude controller uses stored information on the frequency dependent equivalent damping of the respective connectable flywheel unit, which has been derived by Fourier decomposition of the inertia force, and the total equivalent damping force of the flywheel(s) are calculated according to the following equation:

$$F\_fw = m_{eq} ^x \, acc,o + R_{eq} ^x \, v_{rack, o}$$

Where $m_{eq} = J\_flywheel^x \, u^2 \, / \, r^2$

Acc,o is the acceleration, and $v_{rack,o}$ the velocity of the gear rack, 5, imposed by the absorber motion. The index o indicates that the fundamental harmonic components are used.

$R_{eq}$ is the equivalent damping term that has been determined by Fourier decomposition and stored in the controller memory of the computing device, 14.

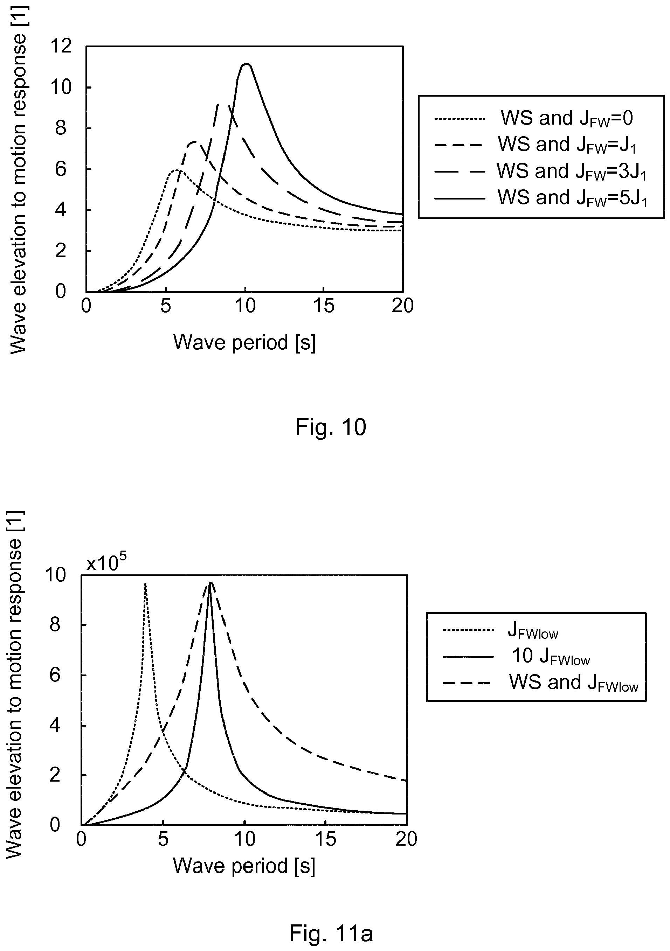

To this inertial damping term, illustrated in Fig 10, the controller calculates how much additional damping that should be added by one or several energy extracting devices 11a-b connected to the rotating PTO 4 and sets the torque of such energy extraction devices, e.g. a generator or a pump, to achieve that torque. The total damping term applied by the optimal amplitude controller, being the sum of the inertial damping term and the resistive damping term of the energy extracting device(s), then damps the motion of the absorber to achieve the optimal or close to optimal absorber motion amplitude corresponding to the amplitude of the measured incident wave. The ratio of the optimal amplitude of the absorber with respect to the incident wave amplitude is calculated by the optimal amplitude controller using stored information on the radiation capability of the absorber, which seeks to ensure maximum destructive interference between the radiated wave from the absorber motion and the incident wave. The capability to extinguish incident waves depends i.a. on the geometry of the point absorber and on the amplitude of its oscillating movement.

The controllers are programmed to simultaneously fulfil the two conditions for optimal phase and optimal amplitude, by such achieving close to optimal power absorption. In electronics the combination of these two optimum conditions are usually referred to as "impedance matching". Further definitions and information on the theory and equations used by the controller is given in Section 3.5 of Falnes (2002): "Ocean Waves and Oscillating Systems: Linear Interactions Including Wave-Energy Extraction", Cambridge University Press.

Starting out from the so calculated desired resonance frequency, the actual resonance frequency of the WEC is thereby adjusted by connecting a suitable number of the flywheels 9a-d to their respective rotating shaft 8a-c. This is done by instructing the respective clutch 10a-d to connect its flywheel to the rotating shafts. For each specific flywheel connected to the rotating shafts, the total inertia of the WEC will increase correspondingly thereby reducing the resonance frequency in a corresponding manner. With the example shown in fig. 1a comprising four flywheels 9a-d having mutually different inertias, the total number of possible inertias added to the WEC is 15 and the resonance frequency may thus be selected in 15 discrete steps by connecting a respective combination of flywheels. In cases where the natural resonance frequency of the WEC without connected flywheels is higher than the incident wave frequency normally occurring at the site the pretension device 15 shown in fig. 1a may be omitted. However, when the natural resonance frequencies of the WEC are lower than normal wave frequencies, the pretension device 15 will increase the nominal resonance frequency of the WEC to above normal wave frequencies. By this means, the actual resonance frequency of the WEC may be adjusted towards the wave frequency merely by connecting a suitable combination of flywheels to thereby reduce the actual resonance frequency toward the wave frequency. The inventive inertia device arrangement thus provides a simple and reliable means for optimizing the resonance frequency of the WEC in order to enhance the energy absorption of the WEC.

Fig. 1b illustrates schematically an embodiment where the inventive inertia device arrangement is applied at a submerged wave absorber, also known as a Submerged Pressure Differential Wave Energy Converter. The WEC here comprises a submerged absorber 1b, which is arranged to be constantly submerged in the ocean and absorb energy from incident waves by moving reciprocally in the vertical and horizontal directions. The WEC further comprises a mooring system 2 by which the WEC is anchored to a foundation 3 arranged at the sea bed. The mooring system 2b comprises a wire or a rod which is fixed to the WEC and to a foundation 3 arranged at the seabed. Just as the WEC illustrated in fig. 1a, also this WEC comprises a rotational power-take-off device (PTO) 4 which is arranged inside the absorber 1b. The PTO 4 comprises a double sided toothed rack 5 which extends generally in the vertical direction. The PTO also comprises a gearbox 6 which is fixed to the point absorber 1b and provided with four pinions 7, two of which meshes with the gear teeth on each of said opposing sides of the rack 5. The pinions 7 are connected to three output shafts 8a, 8b, 8c via a cascade gear arrangement (not shown).

The WEC is further provided with an inertia device arrangement arranged in the point absorber 1b. This arrangement also comprises four inertia devices in the form of flywheels 9a-d which are arranged at respective output shafts 8a-c in the same manner s shown in fig. 1a. Each flywheel 9a-d is connected to a respective clutch 10a-d by means of which each flywheel may be individually connected to and disconnected from the respective output shaft 8a-c.

A first electrical generator 11a is also connected to the first output shaft 8a and a second generator 11b is connected to the second output shaft 8b. The generators 11a, 11b are connected to ocean cables (not shown) for delivering electric power to the grid.

The WEC also comprises detection means for detecting the period i.e. the frequency and the amplitude of the incident waves W. In fig. 1b only one detection means is present, 12a, being equivalent to the sensor 12a in fig 1a, which is arranged on the point absorber 1a. The wave sensing device 12a detects and registers the incident wave amplitude and period.

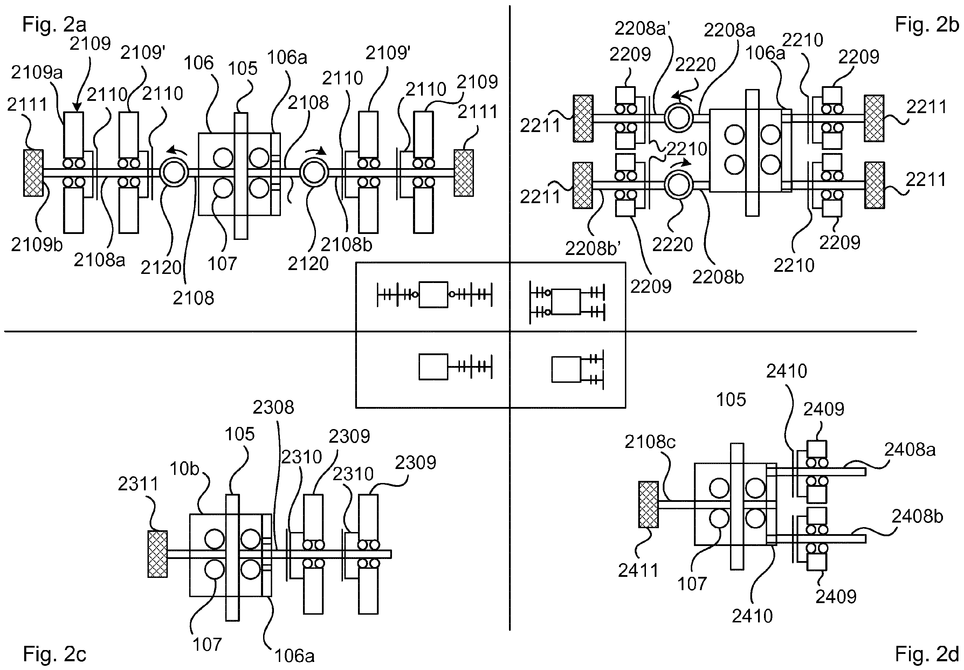

The functioning and operation of the WEC shown in fig. 1b is similar to what is described above with reference to fig. 1a with the exception that the natural resonance frequency of the WEC is higher than the incident wave frequencies normally occurring at the site, such that the pretension device comprised in the WEC shown in fig, 1a has been omitted at the embodiment shown in fig. 2b.

Fig. 1c schematically illustrates another WEC according to the invention, which WEC comprises an oscillating surge absorber 1c. The surge absorber 1c is arranged to absorb the energy of incident waves by pivotal oscillating movement about a pivotal axis P. The surge absorber 1c is connected to a rotational power take off device 4c which is fixed to a fundament 3c arranged at the sea bed. The PTO 4c comprises a gear box 6c which transforms the pivotal movement of the surge absorber 1c into a rotational movement of a first 8a' and a second 8b' output shaft. An inertia device arrangement comprises a first 9a' and a second 9b' flywheel which are arranged at the first output shaft 8a'. A first 10a' and a second 10b' clutch are arranged for selectively connecting and disconnecting the respective flywheel to the first shaft 8a'. An energy extracting device in the form of a hydraulic pump 11' is connected to the second shaft 8b'.

This WEC further comprises a detection means 12c which is arranged at a housing of the PTO 4. The detection means 12c comprises a pressure sensing device which detects and registers pressure variations in the water surrounding the absorber 1c. Values representing the pressure variations are transmitted to a computing device 14 which, based on these values, calculates the frequency and amplitude of the waves influencing the absorber 1c.

Even though the principle of how the surge absorber 1c absorbs energy from incident waves differ somewhat from the absorbing principles of the submerged 1b and semi-submerged 1a point absorbers described above, the principles and operation of the inertia device arrangement of this embodiment corresponds to the inertia device arrangements described above with reference to fig 1a and 1b.

Figs 2a-d illustrates schematically four alternative inertia device arrangements arranged at a rotating PTO. Each fig. 2a-d comprises an outer schematic mechanical representation and an inner functional representation of the respective inertia device arrangement and PTO.

In all four figures the rotating PTO comprises a double sided toothed oscillating rack 105 and a gear box 106 with four pinions 107 meshing with the rack 105. The gear boxes 106 further comprise a cascade gear arrangement 106a comprising additional gears arranged in a cascade configuration for load distribution and for accomplishing the desired gear ratio between the pinions and the output shafts. An example of such a cascade gear arrangement is described in EP 2 921 694 A1. As readily understood the PTO may as an alternative or in combination with a cascade gear comprise other types of gear arrangements such as planetary gears, and/or stepwise or continuously variable gear arrangements.

The inertia device arrangements shown in figs 2a-d, further comprises a number of flywheel devices. Each flywheel device has generally the same configuration as the leftmost flywheel device shown in fig. 2a. Each flywheel device 2109 comprises a rotating wheel 2109a having a specific mass and a bearing 2109b which is arranged to allow the wheel to rotate freely about and relative to the output shaft 2108a. Preferably, the rotational inertia of each wheel 2109a in a inertia device arrangement differ from each other in order to increase the number of possible total inertia combinations provided by the inertia device arrangement. Each flywheel devices 2109 is further arranged to be selectively connected to and disconnected from the output shaft 2108a by means of a clutch 2110.

The inertia device arrangement shown in fig. 2a comprises a rotational output shaft 2108 which extends through and out from opposing sides of the gear box 106. On each side of the gear box 106 the output shaft 2108 is connected to a respective freewheel 2120. The freewheels 2120 are arranged to allow distal end portions 2108a, 2108b of the shaft 2108 to rotate only in one respective direction irrespective of the oscillating rotational direction of the proximal portion of the shaft 2018. Thus, at downward stroke of the rack 105, the distal portion 2108a of the shaft 2018 at one side of the gear box 106 is accelerated and rotated in a first rotational direction whereas the distal end 2108b on the other side of the gear box106 is allowed to spin freely in a second opposite rotational direction. At upward stroke of the rack 105, the distal portion 2108a spins freely in the first direction whereas distal end 2108b is accelerated and rotated in the second rotational direction. Additional gearing can be provided by the gear step 106a, by increasing the gear ratio thus increasing the rotational speed of the output shafts while increasing the effective mass of a given flywheel and the damping capacity of a generator with a given torque capacity.

A first 2109 and a second 2109' flywheel device are arranged in series at each distal end portion 2108a, 2108b of the output shaft 2108. Each flywheel device 2109, 2109' is arranged to be selectively connected to and disconnected from the distal shaft portion 2108a, 2108b by means of a respective clutch 2110. An energy extracting device in the form of an electrical generator 2111 is further connected to the free end of each distal end portion 2108a, 2108b.

The inertia device arrangement shown in fig 2a allows for unidirectional operation of each set of flywheels and generators, due to the freewheels 2120. This arrangement combining freewheels, connectable flywheels and generators offers phase and amplitude control of the WEC motion during periods when the selected combination of flywheels are engaged through the freewheel, such periods determined by positive acceleration in the respective direction. An active clutch can be used together with the controller to provide the same function of engaging and disengaging the respective set of flywheels and generators, in such configuration replacing the freewheel components and providing additional freedom for the controller to decide the timing on when to engage and disengage. As the respective set of flywheels and generator disengages from the shaft 2108 when the absorber starts decelerating, the wheels are spinning freely, and the kinetic energy stored in the flywheels is gradually converted into electricity by the generator. The controller uses information on the prevailing wave period to determine how fast to spin down the flywheel to zero speed. This temporary energy storage function allows a relatively large amount of energy to be absorbed into the flywheels during the engaged period, and then converted into electricity during a longer period of time, thus smoothing the power output of the equipment.

By having two sets of flywheels and generators, one operating in each direction, the electricity output from each set can overlap in time, providing more continuous power output compared to the profile of the absorbed power into the system, resulting in power smoothing and smaller power requirements on generators and associated power electronics compared to the case where same damping would be provided onto the gearbox shafts directly by generators. In order to achieve maximum power smoothing the controller can be programmed to spin down the respective set of flywheels to reach zero rpm just before the next oscillating cycle in positive acceleration occurs, using information on the incident wave as provided by the wave sensing system. Doing so converts essentially all the kinetic energy from the flywheels that was absorbed and stored in the previous charging cycle into electricity, thus effectively providing tuned damping and power conversion to the WEC. As the frequency of oscillation is controlled by the connected flywheels during the engaged periods, the overall period of oscillation is tuned by the combination of flywheels engaged.

The configuration thus provides for that both the resonance frequency and the amplitude may readily be controlled in order to bring either or both of these parameters towards their optimum values such that the energy absorption efficiency is increased.

At the embodiment shown in fig. 2b, the inertia device arrangement comprises a first output shaft 2208a and a second output shaft 2208a. Both output shafts extend through and out from respective sides of the gear box 106. At the right hand side a flywheel device 2209 is arranged connectable and dis-connectable to the first 2208a and the second 2208b output shaft by means of a respective clutch 2210. At the left hand side the output shafts 2208a, 2208b are provided with a respective freewheel 2220 which are arranged to allow free spinning in mutual opposite rotational directions. By this means an distal end portion 2208a' of the first output shaft 2208a is arranged to be accelerated at downward stroke of the rack 105 and an distal end portion 2208b'of the second output shaft 2208b is arranged to be accelerated at upward stroke of the rack 105. A flywheel device 2209 is arranged connectable and dis-connectable to the first 2208a' and the second 2208b' distal end portions by means of a respective clutch 2210. An electrical generator 2211 is connected to each free end of the first 2208a and second 2208b output shaft, on both sides of the gear box 106.

Comparing the parallel flywheel and generator configuration of Fig 2b with Fig 2a, the same functions for phase and amplitude control as well as temporary energy storage and power smoothing are supported. As mentioned for configuration of Fig 2a, active clutches can together with controller provide the same or similar function as a freewheel. A difference is that the controller is given additional freedom to determine the optimal timing on when to engage or disengage the respective set of flywheels and generators. The flywheels connected to the gearbox through a clutch can thereby be given either rectified or bidirectional operation, and be connected during any desired potion of the upward or downward motion of the absorber, providing additional phase and amplitude control functionality. The generators that are directly connected to the shaft of the gearbox are given bidirectional operation, and can apply damping in both directions at any point in time, thereby providing additional amplitude control freedom. Moreover, the parallel integration of multiple flywheels and generators requires additional output shafts from the gearbox, but may offer simplified mechanical arrangements having only one flywheel per shaft.

Both embodiments shown in figs 2a and 2b are thus so called rectified arrangements where at least some of the flywheels and generator rotates only in one respective rotational direction.

Fig. 2c and 2d illustrate schematically two non-rectified, inertia device arrangements that can be given either bi-directional or rectified functionality by the actively controlled clutches connecting the flywheels to the gearbox. In fig. 2c the inertia device arrangement comprises a single output shaft 2208 which extends through and out from the gear box 106. At the right hand side, two flywheel devices 2309 are arranged in series and selectively connectable and dis-connectable to the output shaft 2308 by means of a respective clutch 2310. An electrical generator 2311 is connected to the free end of the output shaft 2308, at the left hand side of the gear box 106. The generators having bidirectional operation, can apply damping in both directions at any point in time, thereby providing additional amplitude control freedom. The same advantages of serial and parallel configuration of flywheels as described for Fig 2a-b applies for Fig 2c-d.

The inertia device arrangement shown in fig. 2d comprises three output shafts. A first 2408a and a second 2408b output shaft extends out from the right hand side of the gear box 106. A flywheel arrangement 2409 is arranged to be selectively connected to and dis-connected from each of the first and second output shafts, by means of a respective clutch 2010. An electrical generator is connected to the free end of the third output shaft 2408c, at the left hand side of the gear box 106.

Any configuration of clutches, freewheels, inertia devices and energy extracting devices shown if Fig 2a-d can be further combined to achieve optimal phase and optimal amplitude control according to the invention.

The energy extracting devices could be electrical generators, pumps or other types of resistive energy conversion devices that can be operated on a rotating shaft. Inertia devices can be flywheels, or any portion of rotating machines, such as the rotor of a generator or the rotating portion of a pump. Rotors of generators may also be physically integrated with a flywheel. However, whether or not the rotational inertia devices are integrated in other rotational machines, they must have a rotating mass which is great enough to significantly influence the total inertia of the WEC, such that it may be used for reducing the resonance frequency of the WEC towards a desired resonance frequency when connected to the PTO.

Rotating PTOs can be provided by the mentioned type of cascade gearboxes, or any other arrangement capable of converting linear motion into rotation, such as chain drives, belt drives or ball screws. In additional to rack and pinion gearboxes converting linear motion into rotation, additional gear steps may be added between the rotating PTO and the inertia devices, such as epicyclic drives or other known solutions for increasing or decreasing the rotational speed between a rotating input and output shaft.

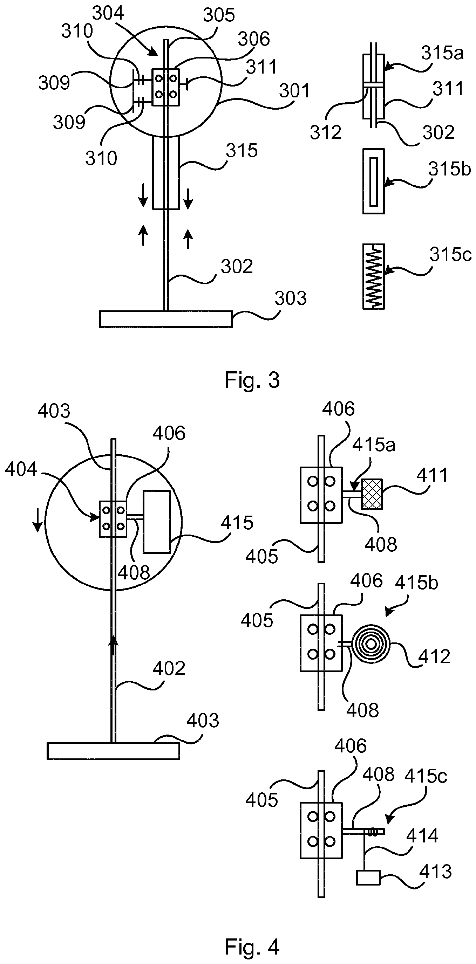

As indicated above the inventive inertia device arrangements may be combined with pretension devices for increasing the nominal resonance frequency of the WEC. Figs. 3 and 4 illustrates schematically some different means for accomplishing such pretension of the WEC. In fig 3 the WEC comprises a point absorber 301 which is moored to a fundament 303 by means of a mooring system 302. A rotational PTO 304 comprising a gear box 306 and a gear rack 305 is arranged inside the point absorber 301. A inertia device arrangement comprising two flywheels 309 with clutches 310 and a generator 311 is connected to the PTO 304. The WEC further comprises a pretension device 315 which is generally indicated in the system view to left in fig. 3a. On the right hand side of fig. 3, three alternative pretension devices 315a, 315b and 315c are schematically illustrated one above the other. Either of the pretension devices 215a-c may thus replace the general pretension device 315 when it is desirable to apply a pretensional force to the WEC. All pretensional devices 315a-c shown in fig 3 are acting linearly.

The pretension device 315a comprises a pressurized fluid or gas cylinder 311 attached to the point absorber and a piston 311 which is fixed relative to the mooring system 302. The pressurized fluid acting on the piston 312 and the cylinder 311 urges the point absorber downwardly, thereby pre-tensioning the point absorber in the oscillating direction being opposite to the upwardly directed lifting force applied to the point absorber by incident ocean waves. At a non-shown alternative the gas cylinder may be substituted by a hydraulic cylinder acting in the same direction. The pretension device 315b comprises an electrical linear motor which is which is arranged to drive the point absorber 301 in the downward direction. The pretension device 315c comprises a mechanical spring which urges the point absorber downwardly relative to the mooring system.

All pretension devices 315a-c are preferably arranged to minimize the spring constant of the oscillating system when incident waves causes the absorber to oscillate.

Fig. 4 illustrates different rotational pretension means which may be used at the WEC according to the invention. As shown on the left hand side of fig. 4 the WEC comprises a point absorber 401 which is moored to a fundament 403 by means of a mooring system 402. A rotational PTO 404 comprising a gear rack 405 and a gear box 406 with an output shaft 408 is arranged inside the point absorber 401. The PTO also comprises an inertia device arrangement as described above but not illustrated in fig. 4. The WEC further comprises a pretension device 415 which is connected to the output shaft 408 and generally indicated in the system view to left in fig. On the right hand side of fig. 4, three alternative pretension devices 415a, 415b and 415c are schematically illustrated one above the other. The pretension device 415a comprises an electrical motor / generator which is arranged to drive the output shaft in a rotational direction which forces the gear box 406 and thereby the point absorber in the downward direction relative to the rack 405 and the mooring system 402. In a non-shown alternative the electrical motor/generator may be substituted by a hydraulic or pneumatic motor / pump. Electrical motors may be combined with electrical energy storage units, such as batteries or capacitor banks, to cope with varying current flows during the oscillating motion of the WEC. Pumps may be combined with pressurized accumulators to cope with varying fluid flows during the oscillating motion of the WEC. The pretension device 415b comprises a mechanical, flat helical spring, generally of the watchspring type which is connected to the output shaft 408 and pretensioned to urge the gear box 406 and thereby the point absorber 401 downwards relative to the rack 405 and the mooring system 402. The pretension device 415c comprises a weight 413 which is fixed to a wire 414 or the like which in turn is wound onto the output shaft 408. The winding direction is chosen such that, when gravitation acts on the weight 413 thereby urging the wound wire off the output shaft 408, the resulting rotation of the output shaft is directed such that the gear box 406 and the point absorber 401 is urged downwards relative to the rack 405 and the mooring system 402. Instead of a weight a linear cylinder, motor or spring may be used to apply the corresponding force on the wire 414.

Adding a pre-tension system to the WEC also provides the means for uniform bi-directional operation of the WEC, meaning that equal or similar amount of energy can be converted in the two opposite directions of oscillation. Without pre-tensioning many WEC types, such as point absorbers, may either require a very large mass of the oscillating WEC, or have limited capabilities in extracting energy in the downward/return direction with respect to the excitation force of waves

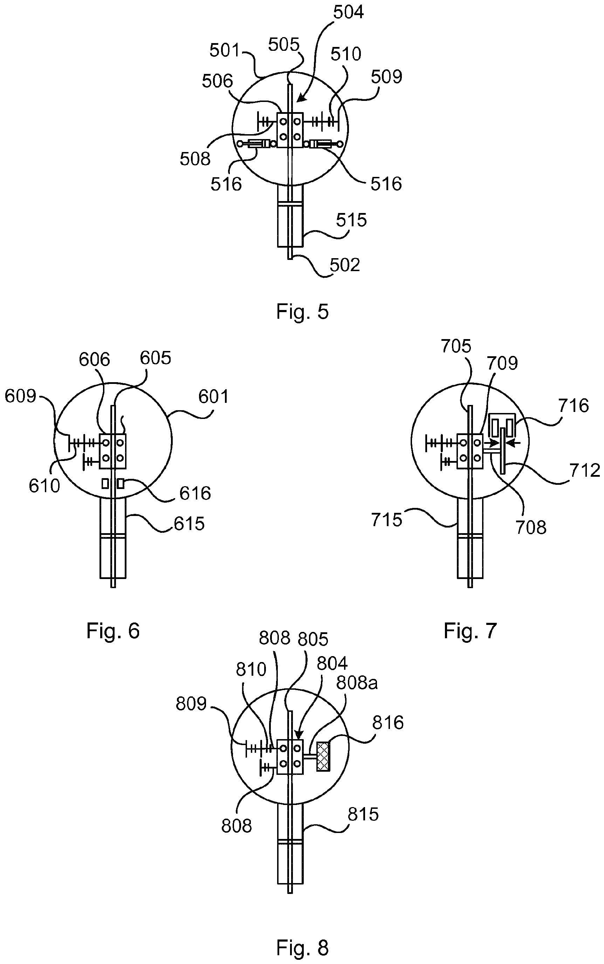

The inventive inertia device arrangement may further be combined with other means for controlling the oscillating phase. Figs. 5-8 illustrate schematically four examples of such additional phase control means.

At the embodiment shown in fig. 5, the WEC comprises a point absorber 501, a mooring system 502 and a rotational PTO 504 comprising a rack 505 and a gear box 506 with an output shaft 508 and an inertia device arrangement comprising three flywheels 509 and corresponding clutches 510.

In addition the WEC comprises a so called or negative spring arrangement, sometimes referred to as a wave spring arrangement which is arranged to apply a positive force in the direction of movement when the point absorber 501 moves away in either oscillating direction from a an equilibrium position. In the shown example the negative spring arrangement comprises two gas springs 516 which are pivotally fixed to the point absorber and to the PTO. Such a negative spring arrangement is described in detail in WO 2015/107158 A1.

Fig. 6 illustrates a WEC comprising a point absorber 601, a PTO 604 with at rack 605, a gear box 606 and an output shaft connected to an inertia device arrangement comprising flywheels 609 and corresponding clutches 610. Here the additional phase control means comprises a linear latch or brake 616 which is arranged to clamp the rack 505 to thereby reduce the relative speed between the point absorber 601 and the rack 605. Fig 7 illustrates a similar latching or breaking arrangement where the linear brake has been substituted by a break or latch 716 which is arranged to clamp a rotational disc 712 or the like connected to an output shaft 708 of the PTO 704.

The WEC shown in fig. 8 comprises a point absorber 801 and a PTO 804 comprising a rack 805, and a gear box 806 with three output shafts 808. An inertia device arrangement comprises flywheels 809 and clutches 810 arranged at two of the output shafts. An additional phase control means in the form of an electrical motor/generator 816 is connected to the third output shaft 808a. By operating the motor / generator 816 in generator mode the velocity of the PTO 804 and point absorber 801 relative to the rack 805 and mooring system may be decreased. Correspondingly by operating the motor / generator 816 in motor mode said relative velocity may be increased. This type of additional phase control thus constitutes a reactive arrangement which may be used both for increasing and decreasing the velocity of the point absorber.

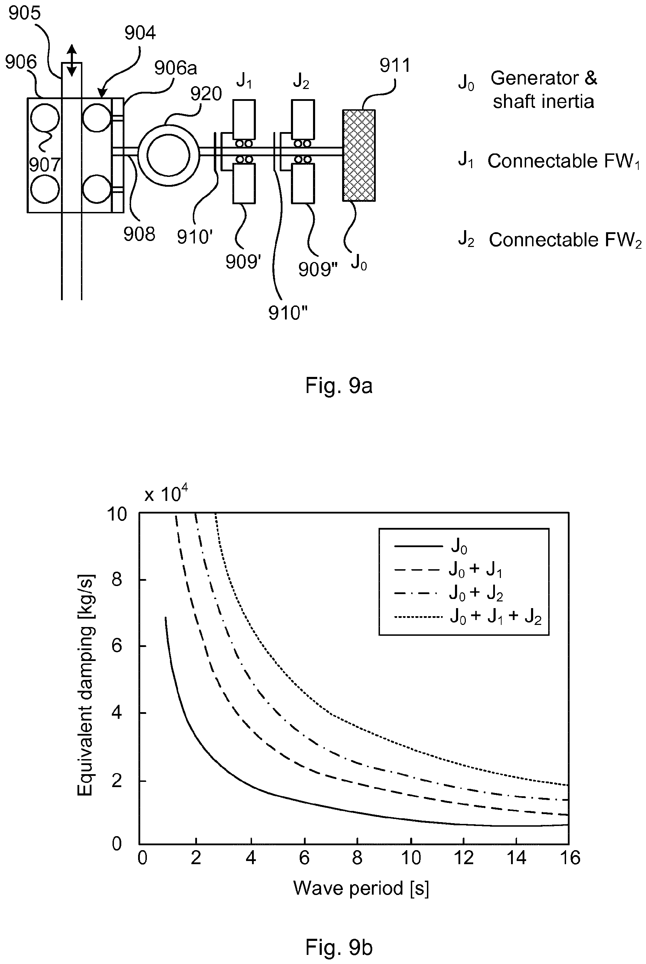

Fig. 9a illustrates schematically a rotational PTO with an inertia device arrangement according to the invention. Here, the other components of the WEC have been eliminated for increased clarity. The PTO 904 comprises a rack 905 and a gear box 906 with pinions 907 and an output shaft 908. The inertia device arrangement comprises a freewheel 920 which connects a distal end 908a of the output shaft 908 to the gear box 906 in only one rotational direction. A first flywheel 909' with an inertia J1 is arranged to be connected to and disconnected from the distal end portion 908a by means of a first clutch 909'. A second flywheel 909" with an inertia J2 is arranged to be connected to and disconnected from the distal end portion 908a in series with the first flywheel 909', by means of a second clutch 909". An electrical generator 911 is connected to the free end of the output shaft 908. The nominal inertia of the generator, the output shaft and the other rotating components of the PTO except the flywheels is called J0.

Now, fig 9b is a diagram illustrating how the equivalent damping of the WEC, in relation to the period of oscillation, may be adjusted by selecting a suitable combination of flywheels connected to the output shaft 908. As seen in the diagram, the equivalent damping may readily be adjusted to the actual wave height and period i.e. the frequency of the incident waves by selecting a suitable combination of flywheels to be connected to the output shaft. The solid line represents the damping with no flywheel connected, the dashed line represents only the first flywheel 909' being connected, the dash-doted line only the second flywheel 909" being connected and the dotted line represents both flywheels 909' and 909" being connected to the output shaft 908.

Fig 10 is a diagram representing the wave elevation to motion response of the point absorber in relation to the period of the incident waves for a WEC comprising an additional control means in the form of a negative spring arrangement in combination with an inertia device arrangement according to the invention. The doted line represents the response when only the negative spring arrangement (WS) and no flywheel is active. The short-dashed line represents the response when a first flywheel having the inertia J1 is connected to the output shaft. The long-doted line represents the response when one or several flywheels having a total inertia of 3 x J1 is connected and the solid line represents the response when one or several flywheels having at total inertia of 5 x J1 is connected. As seen from the diagram, the peak response of the WEC may readily be adjusted to the actual period of the incoming waves by selecting a suitable total inertia of the flywheels to be connected to the output shaft. As readily understood generally the total inertia connected to the PTO should be increased when the period of the incident waves increases.

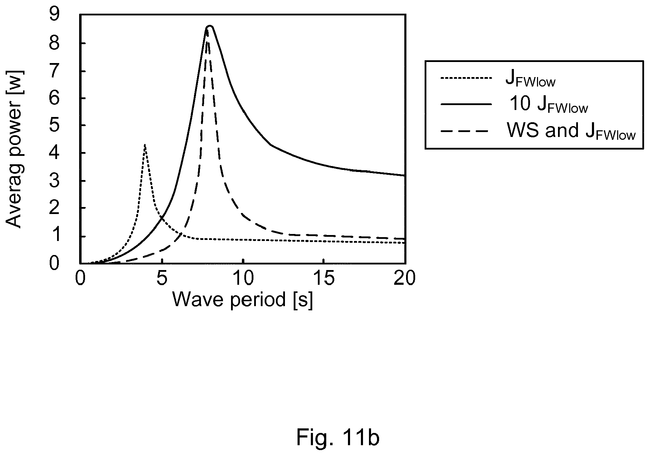

Fig. 11a is a diagram illustrating how the response of the WEC varies with the period of the incident waves with different combinations of connected flywheels and a negative spring arrangement. Fig. 11b illustrates how the average power absorption of the WEC varies with the period of the incident waves for the same WEC. The dotted lines in 11a represent the response and in 11b the average power when only a low nominal inertia and no negative spring arrangement is active. The solid lines in 11a represent the response and 11b the average power when one or several flywheels having a total inertia ten times higher than the low nominal inertia is connected but the negative spring arrangement is kept inactive. The dashed line of 11a represent the response and 11b the average power when the negative spring (WS) arrangement is activated in addition to the flywheels having the larger inertia.

I correspondence with the diagram shown in fig. 10 it is seen that it is possible to adjust the wave period at which the WEC presents peak response and generates peak average power. Increasing the total inertia connected to the output shaft of the PTO thus increases the wave period at which peak response and average power are presented. From the diagrams in figs 11a and 11b it may also be noted that the bandwidth of both the peak response and peak average power is increased when the inertia device arrangement is combined with an activated negative spring arrangement.

The invention has mainly been described above with reference to a few embodiments. However, as is readily appreciated by a person skilled in the art, other embodiments than the ones disclosed above are equally possible within the scope of the invention, as defined by the appended patent claims. For example, in addition to the exemplifying absorbers shown and described above the inventive method and WEC may be advantageously applied also at wave energy converters comprising any other form of absorber and a rotating power-take-off device.

**Claims**

1.   Method of controlling a wave energy converter comprising an energy absorber (1a) which oscillates when influenced by ocean waves, a rotating power-take-off device (4) connected to the absorber, having at least one rotational shaft (8a, 8b, 8c) and at least one connectable rotational inertia device (9a, 9b, 9c), which method comprises the steps of;

> - converting the oscillating movement of the absorber into a rotational movement of the at least one rotational shaft (8a, 8b, 8c) by means of the power-take-off device (4),
> - detecting the actual frequency and the actual amplitude of the incident ocean waves,
> - calculating a desired resonance frequency of the wave energy converter and a desired amplitude of the absorber's oscillating motion based on the detected actual frequency and amplitude respectively of the ocean waves,
> - adjusting the resonance frequency of the wave energy converter towards the desired resonance frequency by selectively connecting and disconnecting at least one of said inertia device(-s) (9a, 9b, 9c) to or from at least one of said rotational shaft(-s) (8a, 8b, 8cc), and
> - adjusting the amplitude of the absorber's oscillating movement towards the desired amplitude by selectively connecting and disconnecting at least one of said inertia device(-s) (9a, 9b, 9c) to or from at least one of said rotational shaft(-s) (8a, 8b, 8c) and having at least one energy extracting device (11a, 11b) connected to at least one of said rotational shaft(-s) (8a, 8b, 8c).

2. Method according to claim 1, wherein at least one of said inertia device(-s) (9a, 9b, 9c), when connected to the rotational shaft (8a, 8b, 8c), is connected during only a portion of an oscillating cycle of the absorber.

3. Method according to claim 2, wherein at least one of said inertia device(-s) (9a, 9b, 9c) is connected to the rotational shaft (8a, 8b, 8c) only during acceleration of the absorber.

4. Method according to claim 1, wherein at least one of said inertia device(-s) (9a, 9b, 9c) is connected to the rotational shaft (8a, 8b, 8c) during one or several full oscillating cycles of the absorber.

5. Method according to any of claims 1-4, wherein at least one of said inertia device(-s) (9a, 9b, 9c) is connected to and disconnected from the rotational shaft (8a, 8b, 8c) by means of a clutch (10a, 10b, 10c).

6. Method according to any of claims 1-5, wherein at least one of said inertia device(-s) (2109) is connected to the rotational shaft (2108a, 2108b) by means of a freewheel device (2120).

7. Method according to any of claims 1-6, comprising selectively connecting and disconnecting a selected number out of a total number of said rotational inertia devices (9a, 9b, 9c) each of which has different inertias.

8. Method according to any of claims 1-7, comprising varying a load applied to the energy extracting device (11a, 11b) for adjusting the damping and thereby the degree of amplitude reduction of the oscillating absorber (1a).

9. Method according to any of claim 1-8, comprising applying a pretensional force to the absorber (1a) which pretensional force reduces the total inertia wave energy converter and thereby the natural period of oscillation.

10. Method according to any of claim 1-9, further comprising controlling the motion of the absorber (1a) also by means of additional control means, provided by either a negative spring arrangement (516), latching means, such as a rotational or linear holding device (616, 716) or a reactive control mean, such as an electrical motor and/or generator (816) or a hydraulic or pneumatic motor and/or pump.

11. A wave energy converter comprising;

    - a rotating power-take-off device (4) comprising means for connection to a an absorber (1a) which oscillates under the influence of ocean waves and a at least one rotational shaft (8a, 8b, 8c) and being arranged to convert a oscillating movement of the absorber into a rotational movement of the at least one rotational shaft,
    - at least one connectable rotational inertia device (9a, 9b, 9c),
    - detection means (12a, 12b, 12c) for detecting the actual frequency and/or the actual amplitude of the ocean waves,
    - calculation means (14) for calculating a desired resonance frequency of the wave energy converter and a desired amplitude of the absorber's oscillating movement based on the actual frequency and amplitude respectively of the ocean waves,
    - control and connection means (10a, 10b, 10c) for selectively connecting and disconnecting at least one of said inertia device(-s) (9a, 9b, 9c) to at least one of said rotational shaft(-s) (8a, 8b, 8c) in order to adjust the resonance frequency of the wave energy converter towards said desired resonance frequency, and
    - at least one energy extracting device (11a, 11b) which is arranged to be connected to at least one of said rotational shaft(-s) (8a, 8b, 8c) during at least periods of time, for adjusting the amplitude of the absorber towards said desired amplitude.

12. A wave energy converter according to claim 11, wherein the connection means comprises a clutch (10a, 10b, 10c).

13. A wave energy converter according to claim 11 or 12, wherein the connection means comprises a freewheel (2120).

14. A wave energy converter according to any of claims 11-13, comprising a plurality of inertia devices (9a, 9b, 9c) having different inertia.

15. A wave energy converter according to any of claims 10-13, further comprising a pretension device (15) arranged to reduce the total inertia of the oscillating absorber (1a) and wave energy converter.

16. A wave energy converter according to any of claims 10-15 comprising further control means arranged for additional control of the movement of the absorber.

Fig. 1a

Fig. 1b

Fig. 1c

Fig. 2b

Fig. 2d

Fig. 2a

Fig. 2c

Fig. 3

Fig. 4

Fig. 5

Fig. 6

Fig. 7

Fig. 8

Fig. 9a

Fig. 9b

Fig. 10

Fig. 11a

Fig. 11b

Europäisches
Patentamt

European
Patent Office

Office européen
des brevets

# EUROPEAN SEARCH REPORT

**Application Number**

EP 17 19 1507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/094778 A1 (WAVE STAR AS [DK]) 26 June 2014 (2014-06-26) * page 6, line 10 - page 7, line 20 * * page 14, line 28 - page 15, line 15 * * page 19, line 16 - page 20, line 16; figures * | 1-16 | INV. F03B13/18 F03B15/00 |
| X | DE 41 43 011 C1 (LAMBRECHT HANS [DE]) 15 April 1993 (1993-04-15) * column 5, line 60 - column 6, line 45 * * column 8, line 54 - column 10, line 54; figures * | 1-16 | |
| A | US 2016/258412 A1 (DEGRIECK JORIS [BE] ET AL) 8 September 2016 (2016-09-08) * paragraph [0087] - paragraph [0105]; figures * | 1-16 | |
| A,D | GB 1 522 661 A (BUDAL K; FALNES J) 23 August 1978 (1978-08-23) * page 3, line 37 - line 85; figures * | 1-16 | TECHNICAL FIELDS SEARCHED (IPC) |
| A | FR 2 992 031 A3 (DE LOS RIOS PIERRE [FR]) 20 December 2013 (2013-12-20) * pages 2,3; figure * | 1-16 | F03B |

The present search report has been drawn up for all claims

| Place of search | Date of completion of the search | Examiner |
|---|---|---|
| Munich | 26 February 2018 | Di Renzo, Raffaele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 456 956 A1**

## ANNEX TO THE EUROPEAN SEARCH REPORT
## ON EUROPEAN PATENT APPLICATION NO.

EP 17 19 1507

26-02-2018

| Patent document cited in search report | | | Publication date | Patent family member(s) | | | Publication date |
|---|---|---|---|---|---|---|---|
| WO 2014094778 | A1 | | 26-06-2014 | NONE | | | |
| DE 4143011 | C1 | | 15-04-1993 | NONE | | | |
| US 2016258412 | A1 | | 08-09-2016 | EP | 3066333 | A1 | 14-09-2016 |
| | | | | US | 2016258412 | A1 | 08-09-2016 |
| | | | | WO | 2015055441 | A1 | 23-04-2015 |
| GB 1522661 | A | | 23-08-1978 | DE | 2529759 | A1 | 22-01-1976 |
| | | | | FR | 2278942 | A1 | 13-02-1976 |
| | | | | GB | 1522661 | A | 23-08-1978 |
| | | | | JP | S5131346 | A | 17-03-1976 |
| | | | | NO | 742429 | A | 06-01-1976 |
| FR 2992031 | A3 | | 20-12-2013 | FR | 2992030 | A1 | 20-12-2013 |
| | | | | FR | 2992031 | A3 | 20-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012008896 A1
- GB 1522661 A
- WO 2015107158 A1
- EP 2921694 A1

**Non-patent literature cited in the description**

- **J. FALNES.** Optimum Control of Oscillation of Wave-Energy Converters. *International Journal of Offshore and Polar Engineering,* June 2002, vol. 12 (2), 147-155
- **FALNES.** Ocean Waves and Oscillating Systems: Linear Interactions Including Wave-Energy Extraction. Cambridge University Press, 2002